# EUROPEAN PATENT SPECIFICATION

(11) **EP 3 261 009 B1**
(45) Date of publication and mention of the grant of the patent: **22.04.2020**
(21) Application number: 16195888.9
(22) Date of filing: 27.10.2016
(51) Int. Cl.: G06F 21/31, H04L 29/06, H04L 29/08

(54) **SYSTEM AND METHOD FOR SECURE ONLINE AUTHENTICATION**
SYSTEM UND VERFAHREN ZUR SICHEREN ONLINE-AUTHENTIFIZIERUNG
SYSTÈME ET PROCÉDÉ D'AUTHENTIFICATION SÉCURISÉE EN LIGNE

(30) Priority: 24.06.2016 RU 2016125283; 16.08.2016 US 201615237738
(43) Date of publication of application: 27.12.2017
(73) Proprietor: AO Kaspersky Lab, Moscow 125212 (RU)
(72) Inventor: PETROVICHEV, Dmitry L., Moscow 125212 (RU); BARANOV, Artem O., Moscow 125212 (RU); GONCHAROV, Evgeny V., Moscow 125212 (RU)
(74) Representative: Sloboshanin, Sergej

(56) References cited:
- WO-A1-2013/089771
- WO-A1-2013/089777
- US-A1- 2011 321 139
- US-A1- 2015 281 227
- Anonymous: "Transport Layer Security - Wikipedia", , 26 March 2014 (2014-03-26), XP055399160, Retrieved from the Internet: URL:https://en.wikipedia.org/w/index.php?t itle=Transport_Layer_Security&oldid=601275 512 [retrieved on 2017-08-16]

## Description

### Field of Technology

The disclosure relates generally to the field of data security, and more specifically, to systems and methods of secure online authentication.

### Background

At present there is a large volume of software for performing various online transactions. Many online transactions involve banking services and electronic money transfer. These transactions are typically performed via standard Internet browsers and separate banking clients (applications), which are especially popular on mobile platforms. Among other applications related to online transactions, electronic currency systems may serve as an example, such as WebMoney or PayPal, or online games which use their own system of micro-transactions during which the user purchases in-game objects or in-game currency with real funds (by using their credit card, for example).

With the growth of online payments, hackers have become very interested in this service sector and actively trying possible ways of intercepting the data of transactions for the purpose of unlawful (fraudulent) transfer of funds. In one example, the theft of such data may be done using malicious programs (or using phishing), which get onto the computers of the users (infecting them). Most often such programs may get onto the computers by infecting popular Internet browsers, intercept data being entered from data entry devices (such as a keyboard or mouse), or intercept data being sent on the network. For example, malicious programs infecting browsers gain access to the browser files and search through the browsing history and the passwords saved when visiting web pages. Data entry interceptors (keyloggers), for example, may intercept the entry of data from a keyboard or mouse, take photographs of the screen (screenshots) and hide their presence in the system using various rootkit technologies. Similar technologies may also be used to create interceptors of network packets (traffic sniffers), which intercept network packets as they are transmitted and extract valuable information from them, such as passwords and other personal data. It should be noted that an infection occurs most often due to vulnerabilities in the software, which makes it possible to carry out various exploits to penetrate the computer system and then install malicious software.

Existing antivirus technologies, such as the use of signature or heuristic analysis, methods of proactive protection or the use of lists of trusted applications (whitelists), may be able to detect some malicious programs on the computers of users, but may not always be able to determine their new modifications, the frequency of appearance of which may be growing on a daily basis. Thus, it is desirable to have robust solutions for safeguarding the programs that facilitate online payments by users.

Some existing software and hardware solutions introduce supplemental factors of authentication, such as the sending of a one-time password (OTP) to a mobile telephone of a user or via the use of hardware for user authentication. However, these solutions may also be vulnerable. One of the examples of harmful programs which can intercept OTPs may include the malicious program Zeus. Thus, improved solutions are needed in order to protect the user's data from being intercepted during an online transaction.

Secure authentication to a remote application operating on a remote server across a network is known from WO 2013/089771 A1. The authentication includes detecting a login associated with the remote application. In response to the detected login, the login process is offloaded to an isolated execution environment configured to receive a login request message from the browser application. Further, confidential information stored in the secure memory storage and associated with the remote application is identified to populate the login request message and to transmit the populated login request message to the remote application.

US 2015/0281227 A1 refers to a method of user authentication for login to websites and web applications to use a computer service. The method is based on using a communication device such as a smartphone and a short-range wireless encryption token as a twofactor authentication solution to use computer services.

US 2011/0321139 provides a method and a system for protecting information and resources in an online environment, wherein a process initialization of a client application on a communication device is monitored. An authentication is performed by performing a code integrity check integrated in the client application independent of the communication device.

A method and a device for Near Field Communication (NFC) tap login with automatically-generated login information are known from WO 2013/089777 A1. A user can launch a browser application and log in a desired website without having to enter the user's username and password. The user can achieve this by tapping a Near Field Communication-enabled computing device with an NFC-enabled wireless device. The wireless device generates and stores the user's usernames and passwords corresponding to a number of websites, and provides the username and password for the desired website to the computing device via an NFC-based communication link. Through a browser application running on the computing device, the user can sign up an account at and log in the desired website.

### Summary

Disclosed are systems and methods for secure online authentication. In one example, a computer-implemented method for secure online authentication comprises: determining, via a processor of a computing device, a connection being established between a browser application installed on a computer system and a protected website; obtaining information relating to the protected website in response to obtaining a request for authentication from the protected website; establishing a protected data transmission channel with the protected website to receive at least one certificate of the protected website; performing authentication and transmitting authentication data to the protected website; and in response to an indication of a successful authentication from the protected website, transmitting identification information to the browser application for enabling access to the protected website.

In another example, determining the connection being established between the browser application installed on the computer system and the protected website comprises: obtaining a uniform resource identifier (URI) address of the protected website via an application programming interface (API) provided by the browser application; or intercepting network traffic between the browser application and the protected website via a driver to obtain a uniform resource identifier (URI) address of the protected website.

In yet another example, the method further comprises: confirming the protected website against a list of addresses of protected websites accessed by the computer system; storing, on the computing device, the list of addresses of protected websites accessed by the computer system and encrypted data relating to the protected websites.

In another example, the information relating to the protected website comprise: a URL address, information relating to the at least one certificate of the protected website, WHOIS information about a domain of the protected website, a list of headers obtained from a reply to a request at the URL address, information relating to downloaded scripts in the form of convolutions or hash sums.

In yet another example, establishing the protected data transmission channel with the protected website comprises: establishing the protected data transmission channel via a driver installed on the computer system; obtaining a complete tree of certificates for the protected website from the driver to check a validity of the at least one certificate; and using a list of root certificates of the computing device to determine a validity of the complete tree of certificates for the protected website.

In another example, the method further comprises checking a validity of the protected website based on obtained information relating to the protected website, the information comprising obtained headers or list of downloaded scripts when establishing the connection; and obtaining a second authentication factor for performing the authentication and transmitting the authentication data to the protected website.

In another example, the method further comprises continuing access to the protected website using browser application after transmitting identification information to the browser application for enabling access to the protected website.

In another example, a system of secure online authentication comprises at least one processor of a computing device configured to: determine a connection being established between a browser application installed on a computer system and a protected website; obtain information relating to the protected website in response to obtaining a request for authentication from the protected website; establish a protected data transmission channel with the protected website to receive at least one certificate of the protected website; perform authentication and transmit authentication data to the protected website; and in response to an indication of a successful authentication from the protected website, transmit identification information to the browser application for enabling access to the protected website.

The above simplified summary of example aspects serves to provide a basic understanding of the present disclosure. This summary is not an extensive overview of all contemplated aspects, and is intended to neither identify key or critical elements of all aspects nor delineate the scope of any or all aspects of the present disclosure. Its sole purpose is to present one or more aspects in a simplified form as a prelude to the more detailed description of the disclosure that follows. To the accomplishment of the foregoing, the one or more aspects of the present disclosure include the features described and exemplary pointed out in the claims.

### Brief Description of the Drawings

The accompanying drawings, which are incorporated into and constitute a part of this specification, illustrate one or more example aspects of the present disclosure and, together with the detailed description, serve to explain their principles and implementations.
**Fig. 1** shows a process of user access to a website in conditions of an untrusted environment.
**Fig. 2** shows an exemplary system for secure online authentication in conditions of an untrusted environment.
**Fig. 3** shows an exemplary method of secure online authentication.
**Fig. 4** shows an expanded diagram of exemplary method of secure online authentication.
**Fig. 5** shows an example configuration of a general-purpose computer system on which aspects of the disclosed systems and method may be implemented.

### Detailed Description

Example aspects are described herein in the context of a system, method and computer program product of secure online authentication. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

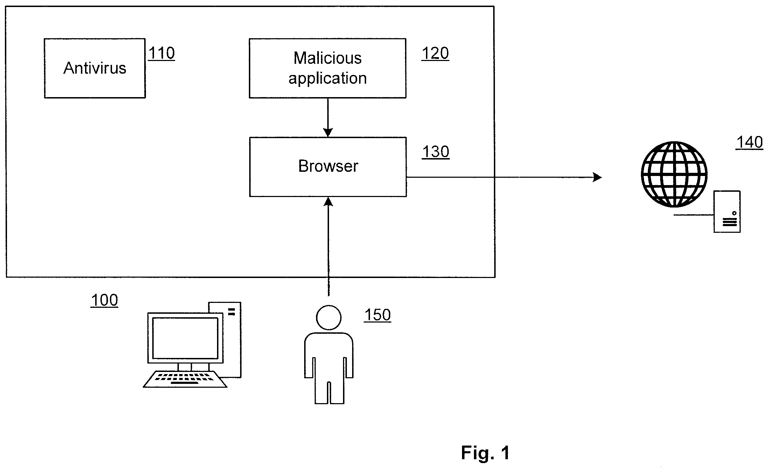

**Fig. 1** shows a process of user access to a website in conditions of an untrusted environment. An untrusted environment may include a computer system **100** on which, even if an antivirus application **110** is installed, there may still exist a risk of the presence of a malicious application **120,** which may compromise the working of a user **150** with a protected site **140** (*i.e.,* with a site where it is necessary to protect the data being received and transmitted when interacting with it) through a browser **130.** The antivirus application **110** may be designed to scan an operating system installed on the computer system **100** for the presence of vulnerabilities and malicious applications. The result of the antivirus scan may indicate the following status: how many and which malicious programs and vulnerabilities have been found. As has been noted above, antivirus technologies that search for and detect malicious applications may not guarantee the detection and removal of all malicious applications because the creators of the latter may be constantly working on ways of circumvent the antivirus scans. For example, methods are known for obfuscation of a code being executed to make signature and heuristic analysis more difficult, as well as methods of anti-emulation, which may make it possible to avoid detection of a malicious application during its emulation by means of an antivirus application. Thus, a solution is needed for protecting the data being received and transmitted from the site **140.**

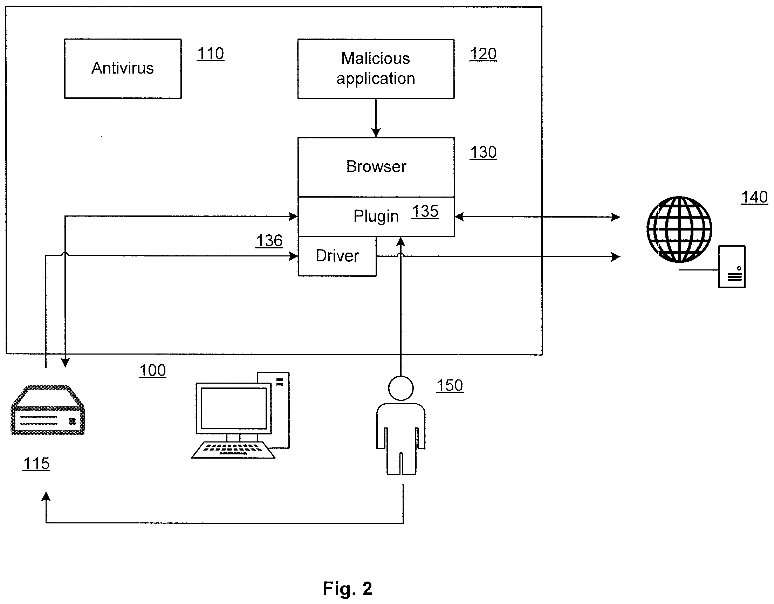

**Fig. 2** shows an exemplary system for secure online authentication in conditions of an untrusted environment. In comparison to **Fig. 1****,** a device for secure data transmission **115** and a plugin in a browser **135** may be added. More specifically, the plugin **135** may be designed to determine that a user **150** has established a connection to the protected site **140** via a browser **130** , and to transmit information that a connection has occurred with the protected site **140** to the device for secure data transmission **115.** For examples, the plugin **135** may be provided as part of an antivirus **110.**

The establishment of a connection may be determined by the plugin **135** via an application programming interface (API), which is provided by the browser **130,** and in which the uniform resource identifier (URI) address of the site **140** may be determined by an analysis of the GET or POST request.

Alternatively, the plugin **135** may call for installing a separate driver **136** (it may be part of the plugin **135,** or be a separate application) for intercepting network traffic between the browser **130** and the site **140.** Based at least on the intercepted data, the uniform resource location (URL) address of the site **140** may be determined. Such a driver may also be used to establish a separate connection between the device **115** and the site **140.** This driver may also obtain information about the site **140**-such as the certificate of the site **140.**

A list of protected addresses may be stored on the device for secure data transmission **115** along with encrypted data needed for the authentication. Upon activation (connection to the computer **100**) of the device **115,** the list of protected addresses may be downloaded to the memory of the plugin **135,** which may scan each address being visited by the user for its presence on this list. The plugin **135** may save the list of addresses either in its own memory or on the hard disk of the computer system **100.**

Thus, the list of addresses of the protected sites may be saved either in the plugin **135** or in the device for secure data transmission **115.** Generally, such a list may be created either by the user **150** himself or by developers of the device for secure data transmission **115** or the plugin **135** (generally the developer of one or both of them). There may be a number of ways of ensuring secure access of the user to sites. One example of the technologies ensuring secure access to sites may include the "Secure payments" technology developed by Kaspersky Laboratory.

In response to obtaining a request for authentication from the protected site **140,** the plugin **135** may send this address and the request itself, including information about the site (such as the form of authentication), to the device **115.** The plugin **135** may also send supplemental information for the scan on the device **115,** such as: URL address, information on the certificate(s) of the site, WHOIS information about the domain, a list of headers obtained from the reply to a request at the URL address, information on downloaded scripts in the form of convolutions (hash sums).

In one example, the device **115** may include an actual software and/or hardware device, system, component, group of components realized by the use of hardware, such as integrated microcircuits (application-specific integrated circuit, ASIC) or a programmable gate array (field-programmable gate array, FPGA) or, for example, in the form of a combination of software and hardware, such as a microprocessor system and a set of program instructions, or also based on neurosynaptic chips.

In one example, the device for secure data transmission **115** may include a processor, a memory module for the storing and use of temporary data, a data medium with capability of creating and encrypting partitions, and also at a minimum one adapter (generally a USB) for connecting to the computer system **100,** as well as means for entering/obtaining user authentication factors. As discussed above, the device **115** may save a list of addresses of protected sites together with encrypted data relating to these sites (generally this may include login/password associations and other data of authentication forms, but it may also include other confidential user data, such as payment data). This list may be downloaded from the device **115** into the memory of the plugin for comparison with each subsequent request.

Immediately after receiving a request for authentication sent by the plugin **135,** the device **115** may initiate creation of a new protected connection to the site **140,** from which it may obtain a certificate. The new protected connection may be created by a driver **136.** For the checking (verification) of the certificate received, the device **115** may inquiry the driver **136** installed on the computer **100** for a complete tree of certificates for the site **140** with the exception of the root certificate. Using its own list of root certificates, the device **115** may check the validity (trustworthiness) of the entire chain of certificates for the site **140.** If the check is not successful, the protected connection may be disconnected. The device **115** may also use other information from the plugin **135** for the checking of the site **140** - for example, the obtained headers or list of downloaded scripts when establishing the connection. For example, the device **115** may compare the convolution (hash sum) of the downloaded scripts from the site **140,** obtained from the plugin **135,** with its own hash sum, which may be saved on the device **115,** and if the convolutions do not match, the connection to the site **140** may be disconnected.

In one example, information (such as personal data of the user) may be stored on a data medium in the device **115,** and executable code may be implemented upon receiving data from the plugin **135.** In one example, the working with the device **115** may only be done using the plugin **135.** For example, the PKI (Public Key Infrastructure) architecture may be used for the authentication and exchange of data. The private key for the device **115** may be provided by the developer of the given device.

In another example, the plugin **135** may call for access to data which may be stored in the memory of the plugin **135** through the use of a separate API, which may allow the developers of foreign devices similar to the device **115** to use the given plugin.

Another functionality of the device **115** may include implementation of a second user authentication factor. The use of a second authentication factor may be realized using an OTP, confirmation of the digital signature of the user, or biometric data of the user. This makes it possible to protect the user's authentication data from a memory dump of the device **115** when stolen. Only after receiving the second authentication factor is the device **115** able to decrypt the user's authentication data and send it to the site **140** as if this data had been filled out and sent with the use of the browser **130.**

The device **115** may perform the authentication and send the necessary authentication data relating to the site **140.** Besides the authentication data, the device **115** may also store other information - such as payment data on the user's accounts/transactions. Such information may be stored in encrypted form and may be decrypted only after obtaining information on the performance of the second authentication factor. In response to obtaining the response on successful authentication from the site **140,** the device **115** may send an identifier of a new session and other information needed for the identification of the authorized user to the plugin **135,** which may dispatch them to the browser **130** in response to the browser dispatching the original request to the site **140.** Thus, the browser **130** at once may obtain the data of the new session of the user, thereby continuing the usual web surfing, but now as an authorized user to the site.

In another example, the user's information may be stored on the device **115** via the sale of the device **115** with user data already incorporated by the bank which also owns the site **140.** Alternatively, the plugin **135** may record the user's information on the site **140** (*e.g.,* it may play the role of a password manager) and transmit this to the device **115.**

In another example, the authentication data of the user **150** may be transmitted to the site **140.** The information from the device **115** may be sent in response to the site **140** in at least one of the following ways:
- Inserting the data on a web page of the site **140.** Certain data (such as login and password) may be associated with the URL address of the web page and inserted in definite fields (as a rule, the fields for inserting the login and the password have a number of attributes by which they may be computed, such as the attribute "password" of the tag "input").
- The data may be prepared in advance in the form of a GET/POST request and dispatched to the server at a particular moment of time or upon occurrence of a certain event. The simplest example may include the dispatching of a POST request with login and password data inserted in the form after receiving a response from the site to a GET request for a web page where said login and password need to be inserted.

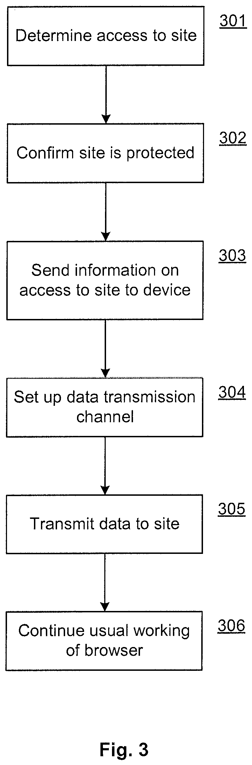

**Fig. 3** shows an exemplary method of secure online authentication. In step **301,** it may be determined the user accessed the site (the user has made a connection) using the browser **130,** after which in step **302** it may determined that the site is a protected site **140.** More details on the determination of the address of the site **140** have been given in the description of **Fig. 2** in the context of the description of the working of the plugin **135.** In step **303,** the device **115** may receive information from the plugin **135** as to the fact of the user accessing the site **140** (i.e., the user may have made a connection), after which the device **115** may set up and use a protected data transmission channel in step **304.** In one example, the protected data channel may include an https connection. In step **305,** the device **115** may extract all information relating to the site **140** and transmit it via the protected data transmission channel. In step **306,** the user may continue working in the browser **130** in the usual way.

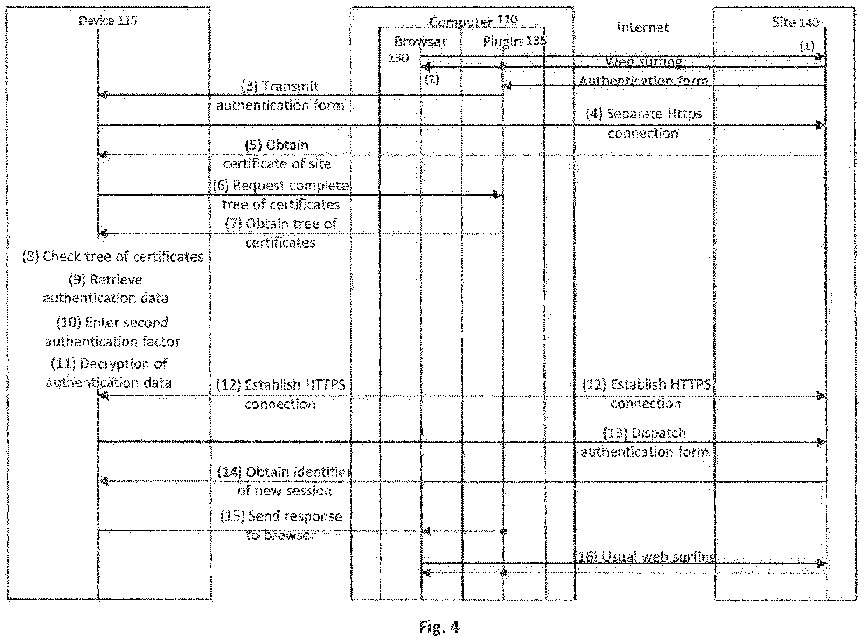

Referring to **Fig. 4****,** during the ordinary web surfing of the user via the browser **130** (step 1), an authentication form may arrive from the site **140** (step 2), which may be intercepted by the plugin **135** and sent to the device **115** (step 3). The device **115** may use the plugin **135** to establish an additional, direct https connection with the site **140** (step 4) and receive the certificate of this site (step 5). To check the validity of the certificate, the device **115** may request a complete tree of certificates from the plugin **135** from the user's computer (step 6). Using the list of its own root certificates (stored on the device **115**), a check may be performed on the device **115** of the validity of the received (step 7) certificate (step 8), and authentication data may be retrieved on the device **115** for the given computer (step 9), corresponding to the site **140.** A request may be then sent to the user to obtain the second authentication factor (for example, a fingerprint or password entered directly into the device **115**) (step 10) and the authentication data in the memory of the device **115** may be decrypted (step 11). After successful performance of the preceding steps, the device **115** (with the help of the plugin **135,** which may only establish a TCP connection and transmit data to the device **115**) may complete the establishing of the https connection with the site **140** (step 12) and send to the site **140** the filled-out authentication form (step 13). For the server (site **140**), this may look like the obtaining of a filled-out form from the browser **130.** The response obtained from the server (step 14) may be relayed by the device **115** to the plugin **135,** which may transmit this directly to the browser **130** (step 15), so that the browser **130** at once may obtain a new session (step 16), having completely passed the authentication mechanism.

In another example, a secure channel for transmission of data between the device **115** and the site **140** may be established. As discussed above, the computer system **100** may be infected with a malicious application **120,** which has not been detected by the antivirus application **110.** Given that the device **115** may not have access to the resources of the computer system **100** and may not perform a supplemental scanning of that system, the device **115** may also request the following data from the antivirus application **110** periodically or at the time of a request from the antivirus application **110** to send data to the site **140:**
- the time and status of the last antivirus scan;
- the update status of the antivirus databases;
- the type of connection to the Internet;
- information on the last known computer threats, which is provided by all suppliers of antivirus software (AV), for example Kaspersky Laboratory provides this in the context of participation in the KSN (Kaspersky Security Network).

After obtaining the given information, a verification of this information may occur on the device **115** with the help of a series of rules which may determine the choice of the settings of the secure data transmission channel between the device **115** and the site **140.**

### Example 1:

Time and status of the last antivirus scan: one minute ago, no harmful software was found.

Antivirus database update status: latest version of antivirus databases has been downloaded.

Type of connection to the Internet: VPN (Virtual Private Network).

Information on the last known computer threats: not found.

Decision: data can be provided through the plugin **135** in decrypted form.

### Example 2:

Time and status of the last antivirus scan: one minute ago, no harmful software was found.

Antivirus database update status: latest version of antivirus databases has been downloaded.

Type of connection to the Internet: open access.

Information on the last known computer threats: new family of malicious software Zeus detected.

Decision: data can be provided through the plugin **135** in encrypted form.

### Example 3:

Time and status of the last antivirus scan: one week ago, harmful software was found.

Antivirus database update status: antivirus databases updated more than a week ago.

Type of connection to the Internet: open access.

Information on the last known computer threats: no data found.

Decision: data should be provided through separate protected connection in encrypted form.

The antivirus application **110** may apply such decisions on the computer system **100.** In some examples, the creation and use of a VPN connection may be provided. In addition, supplemental protection may be provided for the address space of the processes of the browser **130** and plugin **135** against possible scans on the part of the malicious application **120,** and also protection of the clipboard and the inter-process communication (IPC) channels.

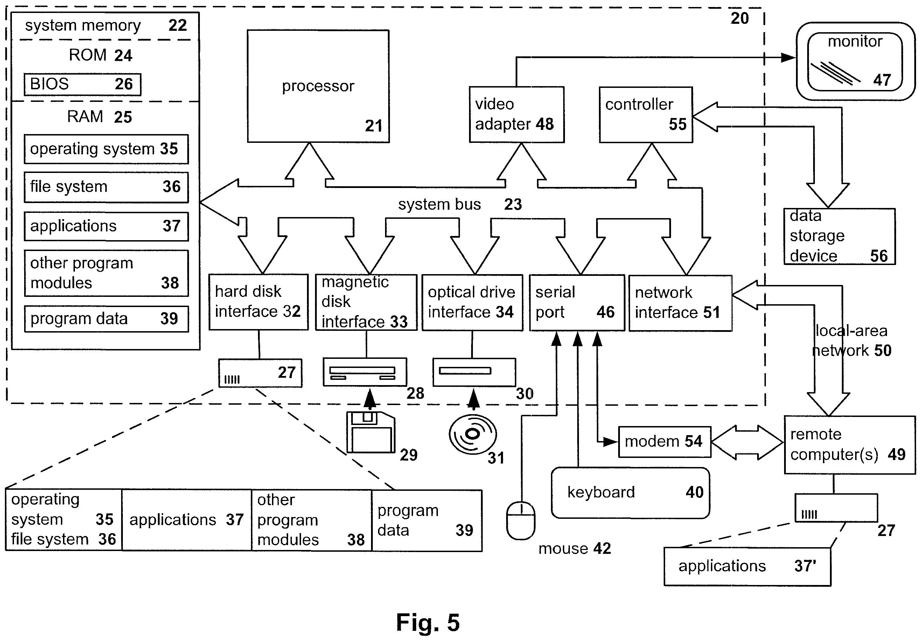

**Fig. 5** illustrates an example computer system (which may be a personal computer or a server) on which the disclosed systems (including one or more of the modules) and the method can be implemented. As shown, the computer system 20 may include a central processing unit 21, a system memory 22 and a system bus 23 connecting the various system components, including the memory associated with the central processing unit 21. The system bus 23 is realized like any bus structure known from the prior art, including in turn a bus memory or bus memory controller, a peripheral bus and a local bus, which is able to interact with any other bus architecture. The system memory includes read only memory (ROM) 24 and random-access memory (RAM) 25. The basic input/output system (BIOS) 26 includes the basic procedures ensuring the transfer of information between elements of the personal computer 20, such as those at the time of loading the operating system with the use of the ROM 24.

The personal computer 20, in turn, includes a hard disk 27 for reading and writing of data, a magnetic disk drive 28 for reading and writing on removable magnetic disks 29 and an optical drive 30 for reading and writing on removable optical disks 31, such as CD-ROM, DVD-ROM and other optical information media. The hard disk 27, the magnetic disk drive 28, and the optical drive 30 are connected to the system bus 23 across the hard disk interface 32, the magnetic disk interface 33 and the optical drive interface 34, respectively. The drives and the corresponding computer information media are power-independent modules for storage of computer instructions, data structures, program modules and other data of the personal computer 20.

The present disclosure provides the implementation of a system that uses a hard disk 27, a removable magnetic disk 29 and a removable optical disk 31, but it should be understood that it is possible to employ other types of computer information media 56 which are able to store data in a form readable by a computer (solid state drives, flash memory cards, digital disks, random-access memory (RAM) and so on), which are connected to the system bus 23 via the controller 55.

The computer 20 has a file system 36, where the recorded operating system 35 is stored and also additional program applications 37, other program modules 38 and program data 39. The user is able to enter commands and information into the personal computer 20 by using input devices (keyboard 40, mouse 42). Other input devices (not shown) can be used: microphone, joystick, game controller, scanner, and so on. Such input devices usually plug into the computer system 20 through a serial port 46, which in turn is connected to the system bus, but they can be connected in other ways, for example, using a parallel port, a game port or a universal serial bus (USB). A monitor 47 or other type of display device is also connected to the system bus 23 across an interface, such as a video adapter 48. In addition to the monitor 47, the personal computer can be equipped with other peripheral output devices (not shown), such as loudspeakers, a printer, and so on.

The personal computer 20 is able to operate within a network environment, using a network connection to one or more remote computers 49. The remote computer (or computers) 49 are also personal computers or servers having the majority or all of the aforementioned elements in describing the nature of a personal computer 20, as shown in Fig. 5. Other devices can also be present in the computer network, such as routers, network stations, peer devices or other network nodes.

Network connections can form a local-area computer network (LAN) 50, such as a wired and/or wireless network, and a wide-area computer network (WAN). Such networks are used in corporate computer networks and internal company networks, and they generally have access to the Internet. In LAN or WAN networks, the personal computer 20 is connected to the local-area network 50 across a network adapter or network interface 51. When networks are used, the personal computer 20 can employ a modem 54 or other modules for providing communications with a wide-area computer network such as the Internet. The modem 54, which is an internal or external device, is connected to the system bus 23 by a serial port 46. It should be noted that the network connections are only examples and need not depict the exact configuration of the network, i.e., in reality there are other ways of establishing a connection of one computer to another by technical communication modules, such as Bluetooth.

In various examples, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

As noted above, in various examples, the systems and methods are described in the present disclosure in terms of modules. It is reiterated that the term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module can also be implemented as a combination of the two, with certain functions facilitated by hardware alone, and other functions facilitated by a combination of hardware and software. In certain implementations, at least a portion, and in some cases, all, of a module can be executed on the processor of a general purpose computer (such as the one described in greater detail in Fig. 5 above). Accordingly, each module can be realized in a variety of suitable configurations, and should not be limited to any example implementation exemplified herein.

In the interest of clarity, not all of the routine features of the aspects are disclosed herein. It will be appreciated that in the development of any actual implementation of the present disclosure, numerous implementation-specific decisions must be made in order to achieve the developer's specific goals, and that these specific goals will vary for different implementations and different developers. It will be appreciated that such a development effort might be complex and time-consuming, but would nevertheless be a routine undertaking of engineering for those of ordinary skill in the art having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

## Claims

1. A computer-implemented method for secure online authentication, the method comprising:
determining, via a processor (21) of a device (115) for secure data transmission, a connection being established between a browser (130) application installed on a computer system (100) and a protected website (140), wherein the computer system (100) is distinct from the device (115) for secure data transmission;
obtaining, at the device (115) for secure data transmission, information relating to the protected website (140) in response to a plugin (135) of the browser (130) determining that the computer system (100) has obtained a request for authentication from the protected website (140);
establishing a protected data transmission channel between the device (115) for secure data transmission and the protected website (140) to receive, at the device (115) for secure data transmission, at least one certificate of the protected website (140);
receiving a complete tree of certificates, except a root certificate, associated with the protected website (140) from the plugin (135) of the browser (130);
verifying validity of the complete tree of certificates based on a list of root certificates stored on the device (115) for secure data transmission;
when the validity of the complete tree of certificates is not verified, disconnecting the protected data transmission channel;
responsive to the complete tree of certificates being verified, performing authentication and transmitting, from the device (115) for secure data transmission, authentication data stored on the device (115) for secure data transmission to the protected website (140); and
in response to an indication of a successful authentication from the protected website (140), transmitting a new session identifier from the device (115) for secure data transmission to the plugin (135) of the browser (130) application for enabling access to the protected website (140).

2. The computer-implemented method according to claim 1, wherein determining the connection being established between the browser (130) application installed on the computer system (100) and the protected website (140) comprises:
obtaining a uniform resource identifier (URI) address of the protected website (140) via an application programming interface (API) provided by the browser (130) application.

3. The computer-implemented method according to any of claims 1-2, wherein determining the connection being established between the browser (130) application installed on the computer system (100) and the protected website (140) comprises:
intercepting network traffic between the browser (130) application and the protected website (140) via a driver (136) to obtain a uniform resource identifier (URI) address of the protected website (140).

4. The computer-implemented method according to any of claims 1-3, further comprising confirming the protected website (140) against a list of addresses of protected websites accessed by the computer system (100).

5. The computer-implemented method according to any of claims 1-4, further comprising storing, on the device (115) for secure data transmission, the list of addresses of protected websites accessed by the computer system (100) and encrypted data relating to the protected websites (140).

6. The computer-implemented method according to any of claims 1-5, wherein the information relating to the protected website (140) comprise: a URL address, information relating to the at least one certificate of the protected website (140), WHOIS information about a domain of the protected website (140), a list of headers obtained from a reply to a request at the URL address, information relating to downloaded scripts in the form of convolutions or hash sums.

7. The computer-implemented method according to any of claims 1-6, wherein establishing the protected data transmission channel with the protected website (140) comprises:
establishing the protected data transmission channel between the protected website (140) and the device (115) for secure data transmission via a driver (136) installed on the computer system (100); and
obtaining, at the device (115) for secure data transmission, the complete tree of certificates from the driver (136).

8. The computer-implemented method according to claim 7, further comprising:
checking a validity of the protected website (140) based on obtained information relating to the protected website (140), the information comprising obtained headers.

9. The computer-implemented method according to any of claims 1-7, further comprising:
checking a validity of the protected website (140) based on obtained information relating to the protected website (140), the information comprising a list of downloaded scripts when establishing the connection.

10. The computer-implemented method according to any of claims 1-9, further comprising:
obtaining a second authentication factor for performing the authentication and transmitting the authentication data to the protected website (140).

11. The computer-implemented method according to any of claims 1-10, further comprising:
continuing access to the protected website (140) using browser (130) application after transmitting identification information to the browser (130) application for enabling access to the protected website (140).

12. A system for secure online authentication, comprising:
at least one processor (21) of a device (115) for secure data transmission configured to:
determine a connection being established between a browser (130) application installed on a computer system (100) and a protected website (140), wherein the computer system (100) is distinct from the device (115) for secure data transmission;
obtain, at the device (115) for secure data transmission, information relating to the protected website (140) in response to a plugin (135) of the browser (130) determining that the computer system (100) has obtained a request for authentication from the protected website (140);
establish a protected data transmission channel between the device (115) for secure data transmission and the protected website (140) to receive at least one certificate of the protected website (140);
receive a complete tree of certificates, except a root certificate, associated with the protected website (140) from the plugin (135) of the browser (130);
verify validity of the complete tree of certificates based on a list of root certificates stored on the device (115) for secure data transmission;
when the validity of the complete tree of certificates is not verified, disconnect the protected data transmission channel;
responsive to the complete tree of certificates being verified, perform authentication, and, from the device (115) for secure data transmission, transmit authentication data stored on the device (115) for secure data transmission to the protected website (140); and
in response to an indication of a successful authentication from the protected website (140), transmit a new session identifier from the device (115) for secure data transmission to the plugin (135) of the browser (130) application for enabling access to the protected website (140).

13. The system according to claim 12, wherein, to determine the connection being established between the browser (130) application installed on the computer system (100) and the protected website (140), the processor (21) is configured to:
obtain a uniform resource identifier (URI) address of the protected website via an application programming interface (API) provided by the browser (130) application; or
intercept network traffic between the browser (130) application and the protected website (140) via a driver (136) to obtain a uniform resource identifier (URI) address of the protected website (140).

14. The system according to any of claims 12-13, wherein the processor (21) is further configured to:
store a list of addresses of protected websites (140) accessed by the computer system (100) and encrypted data relating to the protected websites (140); and
confirm the protected website (140) against the list of addresses of protected websites accessed by the computer system (100).

15. The system according to any of claims 12-14, wherein the information relating to the protected website (140) comprise: a URL address, information relating to the at least one certificate of the protected website (140), WHOIS information about a domain of the protected website (140), a list of headers obtained from a reply to a request at the URL address, information relating to downloaded scripts in the form of convolutions or hash sums.

## Patentansprüche

1. Computerimplementiertes Verfahren zur sicheren Online-Authentifizierung, wobei das Verfahren umfasst:
Bestimmen, über einen Prozessor (21) einer Vorrichtung (115) zur sicheren Datenübertragung, dass eine Verbindung zwischen einer auf einem Computersystem (100) installierten Browser(130)-Anwendung und einer geschützten Webseite (140) aufgebaut ist, wobei das Computersystem (100) verschieden von der Vorrichtung (115) zur sicheren Datenübertragung ist;
Erhalten, an der Vorrichtung (115) zur sicheren Datenübertragung, einer Information bezüglich der geschützten Webseite (140) in Ansprechung auf ein Plugin (135) des Browsers (130), das bestimmt, dass das Computersystem (100) eine Anforderung zur Authentifizierung von der geschützten Webseite (140) erhalten hat;
Aufbauen eines geschützten Datenübertragungskanals zwischen der Vorrichtung (115) zur sicheren Datenübertragung und der geschützten Webseite (140), um, an der Vorrichtung (115) zur sicheren Datenübertragung, wenigstens ein Zertifikat der geschützten Webseite (140) zu empfangen;
Empfangen eines kompletten Baums von Zertifikaten, mit Ausnahme eines Root-Zertifikats, die mit der geschützten Webseite (140) assoziiert sind, von dem Plugin (135) des Browsers (130);
Verifizieren einer Validität des kompletten Baums von Zertifikaten basierend auf einer Liste von Root-Zertifikaten, die auf dem Gerät (115) für sichere Datenübertragung gespeichert sind;
wenn die Validität des kompletten Baums von Zertifikaten nicht verifiziert wird, Trennen des geschützten Datenübertragungskanals;
ansprechend darauf, dass der komplette Baum von Zertifikaten verifiziert wird, Durchführen einer Authentifizierung und Übertragen, von der Vorrichtung (115) zur sicheren Datenübertragung, von Authentifizierungsdaten, die auf der Vorrichtung (115) zur sicheren Datenübertragung gespeichert sind, zu der geschützten Webseite (140); und
in Ansprechung auf eine Anzeige einer erfolgreichen Authentifizierung von der geschützten Webseite (140), Übertragen eines neuen Sitzungsidentifikators von der Vorrichtung (115) zur sicheren Datenübertragung zu dem Plugin (135) der Browser(130)-Anwendung, um einen Zugriff auf die geschützte Webseite (140) zu ermöglichen.

2. Computerimplementiertes Verfahren nach Anspruch 1, wobei das Bestimmen, dass die Verbindung zwischen der auf dem Computersystem (100) installierten Browser(130)-Anwendung und der geschützten Webseite (140) aufgebaut ist, umfasst:
Erhalten einer Uniform-Resource-ldentifier(URI)-Adresse der geschützten Webseite (140) über eine von der Browser(130)-Anwendung bereitgestellte Anwendungsprogrammierschnittstelle (*application programming interface;* API).

3. Computerimplementiertes Verfahren nach einem der Ansprüche 1 - 2, wobei das Bestimmen, dass die Verbindung zwischen der auf dem Computersystem (100) installierten Browser(130)-Anwendung und der geschützten Webseite (140) aufgebaut ist, umfasst:
Abfangen eines Netzwerkverkehrs zwischen der Browser(130)-Anwendung und der geschützten Webseite (140) über einen Treiber (136), um eine Uniform-Resource-Identifier(URI)-Adresse der geschützten Webseite (140) zu erhalten.

4. Computerimplementiertes Verfahren nach einem der Ansprüche 1 - 3, ferner umfassend ein Bestätigen der geschützten Webseite (140) gegenüber eine Liste von Adressen geschützter Webseiten, auf die das Computersystem (100) zugreift.

5. Computerimplementiertes Verfahren nach einem der Ansprüche 1 - 4, ferner umfassend ein Speichern, auf der Vorrichtung (115) zur sicheren Datenübertragung, der Liste von Adressen geschützter Webseiten, auf die das Computersystem (100) zugreift, und verschlüsselter Daten bezüglich der geschützten Webseiten (140).

6. Computerimplementiertes Verfahren nach einem der Ansprüche 1 - 5, wobei die Information bezüglich der geschützten Webseite (140) umfasst: eine URL-Adresse, eine Information bezüglich des wenigstens einen Zertifikats der geschützten Webseite (140), eine WHOIS-Information über eine Domain der geschützten Webseite (140), eine Liste von Headers, die von einer Antwort auf eine Anfrage an der URL-Adresse erhalten wurden, eine Information bezüglich heruntergeladener Skripte in der Form von Konvolutionen oder Prüfsummen.

7. Computerimplementiertes Verfahren nach einem der Ansprüche 1 - 6, wobei das Aufbauen des geschützten Datenübertragungskanals mit der geschützten Webseite (140) umfasst:
Aufbauen des geschützten Datenübertragungskanals zwischen der geschützten Webseite (140) und der Vorrichtung (115) zur sicheren Datenübertragung über einen auf dem Computersystem (100) installierten Treiber (136); und
Erhalten, an der Vorrichtung (115) zur sicheren Datenübertragung des kompletten Baums von Zertifikaten von dem Treiber (136).

8. Computerimplementiertes Verfahren nach Anspruch 7, ferner umfassend:
Überprüfen einer Validität der geschützten Webseite (140) basierend auf einer erhaltenen Information bezüglich der geschützten Webseite (140), wobei die Information erhaltene Header umfasst.

9. Computerimplementiertes Verfahren nach einem der Ansprüche 1 - 7, ferner umfassend:
Überprüfen einer Validität der geschützten Webseite (140) basierend auf einer erhaltenen Information bezüglich der geschützten Webseite (140), wobei die Information eine Liste von beim Aufbauen der Verbindung heruntergeladenen Skripten umfasst.

10. Computerimplementiertes Verfahren nach einem der Ansprüche 1 - 9, ferner umfassend:
Erhalten eines zweiten Authentifizierungsfaktors zum Durchführen der Authentifizierung und Übertragen der Authentifizierungsdaten zu der geschützten Webseite (140).

11. Computerimplementiertes Verfahren nach einem der Ansprüche 1 - 10, ferner umfassend:
Fortsetzen eines Zugriffs auf die geschützte Webseite (140) unter Verwendung einer Browser(130)-Anwendung nach einem Übertragen einer Identifizierungsinformation zu der Browser(130)-Anwendung zum Ermöglichen eines Zugriffs auf die geschützte Webseite (140).

12. System zur sicheren Online-Authentifizierung, umfassend:
wenigstens einen Prozessor (21) einer Vorrichtung (115) zur sicheren Datenübertragung, der dazu konfiguriert ist:
zu bestimmen, dass eine Verbindung zwischen einer auf einem Computerystem (100) installierten Browser(130)-Anwendung und einer geschützten Webseite (140) aufgebaut ist, wobei das Computersystem (100) verschieden von der Vorrichtung (115) zur sicheren Datenübertragung ist;
an der Vorrichtung (115) zur sicheren Datenübertragung, eine Information bezüglich der geschützten Webseite (140) in Ansprechung auf ein Plugin (135) des Browsers (130) zu erhalten, das bestimmt, dass das Computersystem (100) eine Anforderung zur Authentifizierung von der geschützten Webseite (140) erhalten hat;
einen geschützten Datenübertragungskanal zwischen der Vorrichtung (115) zur sicheren Datenübertragung und der geschützten Webseite (140) aufzubauen, um wenigstens ein Zertifikat der geschützten Webseite (140) zu empfangen;
einen kompletten Baum von Zertifikaten, mit Ausnahme eines Root-Zertifikats, die mit der geschützten Webseite (140) assoziiert sind, von dem Plugin (135) des Browsers (130) zu erhalten;
basierend auf einer Liste von Root-Zertifikaten, die auf dem Gerät (115) für sichere Datenübertragung gespeichert sind, eine Validität des kompletten Baums von Zertifikaten zu verifizieren;
wenn die Validität des kompletten Baums von Zertifikaten nicht verifiziert wird, den geschützten Datenübertragungskanal zu trennen;
ansprechend darauf, dass der komplette Baum von Zertifikaten verifiziert wird, eine Authentifizierung durchzuführen und, von der Vorrichtung (115) zur sicheren Datenübertragung, Authentifizierungsdaten, die auf der Vorrichtung (115) zur sicheren Datenübertragung gespeichert sind, zu der geschützten Webseite (140) zu übertragen; und
in Ansprechung auf eine Anzeige einer erfolgreichen Authentifizierung von der geschützten Webseite (140), einen neuen Sitzungsidentifikator von der Vorrichtung (115) zur sicheren Datenübertragung zu dem Plugin (135) der Browser(130)-Anwendung zu übertragen, um einen Zugriff auf die geschützte Webseite (140) zu ermöglichen.

13. System nach Anspruch 12, wobei, zum Bestimmen, dass die Verbindung zwischen der auf dem Computersystem (100) installierten Browser(130)-Anwendung und der geschützten Webseite (140) aufgebaut ist, der Prozessor (21) dazu konfiguriert ist:
eine Uniform-Resource-ldentifier(URI)-Adresse der geschützten Webseite über eine von der Browser(130)-Anwendung bereitgestellte Anwendungsprogrammierschnittstelle (*application programming interface;* API) zu erhalten; oder einen Netzwerkverkehr zwischen der Browser(130)-Anwendung und der geschützten Webseite (140) über einen Treiber (136) abzufangen, um eine Uniform-Resource-ldentifier(URI)-Adresse der geschützten Webseite (140) zu erhalten.

14. System nach einem der Ansprüche 12 - 13, wobei der Prozessor (21) ferner dazu konfiguriert ist:
eine Liste von Adressen geschützter Webseiten (140), auf die das Computersystem (100) zugreift, und verschlüsselte Daten bezüglich der geschützten Webseiten (140) zu speichern; und
die geschützte Webseite (140) gegenüber der Liste von Adressen geschützter Webseiten, auf die das Computersystem (100) zugreift, zu bestätigen.

15. System nach einem der Ansprüche 12 - 14, wobei die Information bezüglich der geschützten Webseite (140) umfasst: eine URL-Adresse, eine Information bezüglich des wenigstens einen Zertifikats der geschützten Webseite (140), eine WHOIS-Information über eine Domain der geschützten Webseite (140), eine Liste von Headers, die von einer Antwort auf eine Anfrage an der URL-Adresse erhalten wurden, eine Information bezüglich heruntergeladener Skripte in der Form von Konvolutionen oder Prüfsummen.

## Revendications

1. Un procédé mis en œuvre par ordinateur destiné à une authentification en ligne sécurisée, le procédé comprenant :
la détermination, par l'intermédiaire d'un processeur (21) d'un dispositif (115) destiné à une transmission de données sécurisée, qu'une connexion est établie entre une application de navigateur (130) installée sur un système informatique (100) et un site web protégé (140), le système informatique (100) étant distinct du dispositif (115) destiné à une transmission de données sécurisée,
l'obtention, au niveau du dispositif (115) destiné à une transmission de données sécurisée, d'informations relatives au site web protégé (140) en réponse à la détermination par un module d'extension (135) du navigateur (130) que le système informatique (100) a obtenu une demande d'authentification à partir du site web protégé (140),
l'établissement d'un canal de transmission de données protégé entre le dispositif (115) destiné à une transmission de données sécurisée et le site web protégé (140) de façon à recevoir, au niveau du dispositif (115) destiné à une transmission de données sécurisée, au moins un certificat du site web protégé (140),
la réception d'un arbre de certificats complet, à l'exception d'un certificat racine, associé au site web protégé (140) à partir du module d'extension (135) du navigateur (130),
la vérification de la validité de l'arbre de certificats complet en fonction d'une liste de certificats racines conservée en mémoire sur le dispositif (115) destiné à une transmission de données sécurisée,
lorsque la validité de l'arbre de certificats complet n'est pas vérifiée, la déconnexion du canal de transmission de données protégé,
en réponse à la vérification de l'arbre de certificats complet, l'exécution d'une authentification et la transmission, à partir du dispositif (115) destiné à une transmission de données sécurisée, de données d'authentification conservées en mémoire sur le dispositif (115) destiné à une transmission de données sécurisée au site web protégé (140), et
en réponse à une indication d'une authentification réussie à partir du site web protégé (140), la transmission d'un nouvel identifiant de session à partir du dispositif (115) destiné à une transmission de données sécurisée au module d'extension (135) de l'application de navigateur (130) de façon à permettre un accès au site web protégé (140).

2. Le procédé mis en oeuvre par ordinateur selon la revendication 1, dans lequel la détermination que la connexion est établie entre l'application de navigateur (130) installée sur le système informatique (100) et le site web protégé (140) comprend :
l'obtention d'une adresse d'identificateur de ressource uniforme (URI) du site web protégé (140) par l'intermédiaire d'une interface de programmation d'application (API) fournie par l'application de navigateur (130).

3. Le procédé mis en oeuvre par ordinateur selon l'une quelconque des revendications 1 à 2, dans lequel la détermination que la connexion est établie entre l'application de navigateur (130) installée sur le système informatique (100) et le site web protégé (140) comprend :
l'interception d'un trafic de réseau entre l'application de navigateur (130) et le site web protégé (140) par l'intermédiaire d'un pilote (136) de façon à obtenir une adresse d'identificateur de ressource uniforme (URI) du site web protégé (140).

4. Le procédé mis en œuvre par ordinateur selon l'une quelconque des revendications 1 à 3, comprenant en outre la confirmation du site web protégé (140) par rapport à une liste d'adresses de sites web protégés accédés par le système informatique (100).

5. Le procédé mis en œuvre par ordinateur selon l'une quelconque des revendications 1 à 4, comprenant en outre la conservation en mémoire, sur le dispositif (115) destiné à une transmission de données sécurisée, de la liste d'adresses de sites web protégés accédés par le système informatique (100) et de données chiffrées relatives aux sites web protégés (140).

6. Le procédé mis en œuvre par ordinateur selon l'une quelconque des revendications 1 à 5, dans lequel les informations relatives au site web protégé (140) comprennent : une adresse URL, des informations relatives au au moins un certificat du site web protégé (140), des informations WHOIS relatives à un domaine du site web protégé (140), une liste d'entêtes obtenue à partir d'une réponse à une demande à l'adresse URL, des informations relatives à des scripts téléchargés sous la forme de convolutions ou de sommes de hachage.

7. Le procédé mis en œuvre par ordinateur selon l'une quelconque des revendications 1 à 6, dans lequel l'établissement du canal de transmission de données protégé avec le site web protégé (140) comprend :
l'établissement du canal de transmission de données protégé entre le site web protégé (140) et le dispositif (115) destiné à une transmission de données sécurisée par l'intermédiaire d'un pilote (136) installé sur le système informatique (100), et
l'obtention, au niveau du dispositif (115) destiné à une transmission de données sécurisée, de l'arbre de certificats complet à partir du pilote (136).

8. Le procédé mis en œuvre par ordinateur selon la revendication 7, comprenant en outre :
la vérification d'une validité du site web protégé (140) en fonction d'informations obtenues relatives au site web protégé (140), les informations comprenant des entêtes obtenus.

9. Le procédé mis en œuvre par ordinateur selon l'une quelconque des revendications 1 à 7, comprenant en outre :
la vérification d'une validité du site web protégé (140) en fonction d'informations obtenues relatives au site web protégé (140), les informations comprenant une liste de scripts téléchargés lors de l'établissement de la connexion.

10. Le procédé mis en œuvre par ordinateur selon l'une quelconque des revendications 1 à 9, comprenant en outre :
l'obtention d'un deuxième facteur d'authentification destiné à l'exécution de l'authentification et la transmission des données d'authentification au site web protégé (140).

11. Le procédé mis en œuvre par ordinateur selon l'une quelconque des revendications 1 à 10, comprenant en outre :
la poursuite de l'accès au site web protégé (140) au moyen de l'application de navigateur (130) après la transmission d'informations d'identification à l'application de navigateur (130) de façon à permettre un accès au site web protégé (140).

12. Un système d'authentification en ligne sécurisée, comprenant :
au moins un processeur (21) d'un dispositif (115) destiné à une transmission de données sécurisée configuré de façon à :
déterminer qu'une connexion est établie entre une application de navigateur (130) installée sur un système informatique (100) et un site web protégé (140), le système informatique (100) étant distinct du dispositif (115) destiné à une transmission de données sécurisée,
obtenir, au niveau du dispositif (115) destiné à une transmission de données sécurisée, des informations relatives au site web protégé (140) en réponse à la détermination par un module d'extension (135) du navigateur (130) que le système informatique (100) a obtenu une demande d'authentification à partir du site web protégé (140),
établir un canal de transmission de données protégé entre le dispositif (115) destiné à une transmission de données sécurisée et le site web protégé (140) de façon à recevoir au moins un certificat du site web protégé (140),
recevoir un arbre de certificats complet, à l'exception d'un certificat racine, associé au site web protégé (140) à partir du module d'extension (135) du navigateur (130),
vérifier la validité de l'arbre de certificats complet en fonction d'une liste de certificats racines conservée en mémoire sur le dispositif (115) destiné à une transmission de données sécurisée,
lorsque la validité de l'arbre de certificats complet n'est pas vérifiée, déconnecter le canal de transmission de données protégé,
en réponse à la vérification de l'arbre de certificats complet, exécuter une authentification et transmettre, à partir du dispositif (115) destiné à une transmission de données sécurisée, des données d'authentification conservées en mémoire sur le dispositif (115) destiné à une transmission de données sécurisée au site web protégé (140), et
en réponse à une indication d'une authentification réussie à partir du site web protégé (140), transmettre un nouvel identifiant de session à partir du dispositif (115) destiné à une transmission de données sécurisée au module d'extension (135) de l'application de navigateur (130) de façon à permettre un accès au site web protégé (140).

13. Le système selon la revendication 12, dans lequel, de façon à déterminer que la connexion est établie entre l'application de navigateur (130) installée sur le système informatique (100) et le site web protégé (140), le processeur (21) est configuré de façon à :
obtenir une adresse d'identificateur de ressource uniforme (URI) du site web protégé par l'intermédiaire d'une interface de programmation d'application (API) fournie par l'application de navigateur (130), ou
intercepter du trafic de réseau entre l'application de navigateur (130) et le site web protégé (140) par l'intermédiaire d'un pilote (136) de façon à obtenir une adresse d'identificateur de ressource uniforme (URI) du site web protégé (140).

14. Le système selon l'une quelconque des revendications 12 à 13, dans lequel le processeur (21) est configuré en outre de façon à :
conserver en mémoire une liste d'adresses de sites web protégés (140) accédés par le système informatique (100) et des données chiffrées relatives aux sites web protégés (140), et
confirmer le site web protégé (140) par rapport à la liste d'adresses de sites web protégés accédés par le système informatique (100).

15. Le système selon l'une quelconque des revendications 12 à 14, dans lequel les informations relatives au site web protégé (140) comprennent : une adresse URL, des informations relatives au au moins un certificat du site web protégé (140), des informations WHOIS relatives à un domaine du site web protégé (140), une liste d'entêtes obtenue à partir d'une réponse à une demande à l'adresse URL, des informations relatives à des scripts téléchargés sous la forme de convolutions ou de sommes de hachage.
